# EUROPEAN PATENT SPECIFICATION

(11) **EP 0 943 653 B1**
(45) Date of publication and mention of the grant of the patent: **12.11.2003**
(21) Application number: 99104887.7
(22) Date of filing: 11.03.1999
(51) Int. Cl.: C08K 5/521, C08K 5/527, C08L 69/00

(54) **Polycarbonate-based flame retardant resin composition**
Flammhemmende Harzzusammensetzung auf Basis von Polycarbonat
Composition de résine ignifuge à base de polycarbonate

(30) Priority: 16.03.1998 JP 6503198
(43) Date of publication of application: 22.09.1999
(73) Proprietor: DAICEL CHEMICAL INDUSTRIES, LTD., Sakai-shi, Osaka (JP)
(72) Inventor: Katayama, Masahiro, Sakai-shi, Osaka (JP)
(74) Representative: Grünecker, Kinkeldey, Stockmair & Schwanhäusser Anwaltssozietät

(56) References cited:
- WO-A-97/41173
- US-A- 4 178 281
- US-A- 4 584 331
- PATENT ABSTRACTS OF JAPAN vol. 098, no. 003, 27 February 1998 & JP 09 286910 A (TEIJIN CHEM LTD), 4 November 1997

## Description

### Field of the Invention

The present invention relates to a polycarbonate-based flame retardant resin composition which is excellent in heat resistance and impact resistance and which has high flame retardation.

### Prior art

Blends of a polycarbonate resin and a styrene-based resin represented by an ABS resin have high heat resistance and impact resistance. Therefore, they have widely been used as so-called polymer alloys as various molded products such as car parts, and electric and electronic parts. In the case in which the polymer alloys are used in electric and electronic parts, or a housing, an enclosure, a chassis or the like of office automation (OA) apparatus, flame retardation is demanded.

Particularly in recent years, for molded products of OA apparatus or electric goods for home use authorization of standards V-0 and 5V has been frequently demanded, which are flame retardant levels based on subject 94 by UL (Under lighters laboratory), which is a flame retardation standard in USA, in order to raise the safety of the goods.

On the other hand, in order to reduce the used amount of raw materials, it is useful to make parts and housings compact and make their thickness thin. At the time of burning, however, there arises drip of a melted resin from a thin portion of the molded product, resulting in a risk of the spread of the fire to other combustibles. In flame retardant resin compositions, therefore, a high flame retardation, which does not cause drip, is also demanded.

In order to give flame retardation, a halogen compound is usually added to a polymer alloy of polycarbonate and a styrene-based resin. However, a halogen compound has a drawback that corrosive or poisonous gas is generated at the time of processing or burning. Thus, it has been desired to develop a non-halogen flame retardant that hardly causes such problems.

As the non-halogen flame retardant, organic phosphorus compounds are used. As a typical organic phosphorus compound, triphenyl phosphate is well known. Triphenyl phosphate, however, has a disadvantage that heat resistance is poor and volatility is high.

As an organic phosphorus compound having a low volatility, US Patent No. 5,204,394 and 5,122,556 describe condensed phosphoric esters. These are more excellent in heat resistance than triphenyl phospahte. However, the resistance is not sufficient from the viewpoint of balance with flame retardation. Many of these condensed phosphoric esters are liquid compounds, and cause a drop in thermal deformation temperature of a resin compound and the like, to deteriorate physical properties of the resin.

US-A-4,178,281 discloses flame-retardant polycarbonate compositions containing a pentaerythritol diphosphonate or diphosphate. From JP-A-09286910, flame-retardant polycarbonate compositions containing a bicyclophosphoric ester compound are known.

Therefore, an object of the present invention is to provide a polycarbonate-based flame retardant resin composition which has high heat resistance and impact resistance, and excellent flame retardation, and generates neither corrosive nor poisonous gas at the time of burning.

The inventor has eagerly made investigations to attain the above-mentioned object. As a result, the inventor has found that by using a phosphoric ester compound and a specified organic phosphorus compound together as a non-halogen flame retardant, it is possible to obtain a molded product having excellent heat resistance and impact resistance that cannot be obtained by using a single of them and having high flame retardation.

That is, the present invention is a polycarbonate-based flame retardant resin composition which comprises
- an aromatic polycarbonate (A);
- a styrene-based resin (B);
- a phosphoric ester compound (C) represented by the following formula (I); and
- an organic phosphorus compound (D) represented by the following formula (II) or (III),
wherein the ratio of the phosphorus concentration of the organic phosphorus compound (D) to that of the phosphoric ester compound (C), P_{D}/P_{C}, is less than 2, which does not include 0 substantially, in the composition; and
wherein the amount of the phosphoric ester compound (C) is 5 to 50 parts by weight and the amount of the organic phosphorus compound (D) is 0.5 to 30 parts by weight per 100 parts by weight of the thermoplastic resin mixture comprising the aromatic polycarbonate (A) and the styrene-based resin (B); 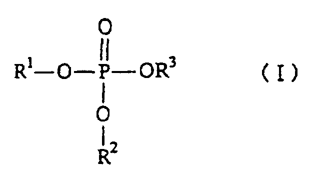 wherein R¹, R² and R³ are the same as or different from one another and are a phenyl group which may have an alkyl group having 1 to 4 carbon atoms; 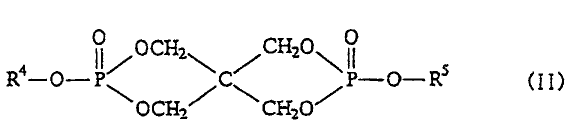 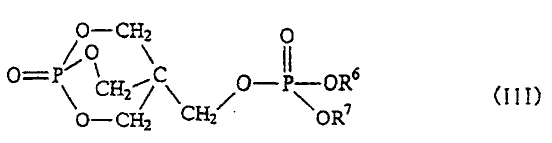 wherein R⁴ and R⁵ are aryl groups which may have 1 to 3 alkyl groups having 1 to 4 carbon atoms, R⁴ and R⁵ may be the same or different, R⁶ and R⁷ each represents a straight chain or branched alkyl group having 1 to 10 carbon atoms, a phenyl group, or an alkyl phenyl group which has 1 to 3 alkyl groups having 1 to 5 carbon atoms.

### Advantageous effect

The combination of specified phosphorus compounds makes it possible to obtain a polycarbonate flame retardant resin composition which generates neither corrosive nor poisonous gas at the time of processing or burning, has excellent flame retardation, exhibits a small decrease in physical properties such as heat resistance and impact resistance, and contains no halogen.

### Embodiments of the invention

The aromatic polycarbonate that is the component (A) of the present invention includes ones obtained by reaction of various dihydroxyaryl compounds and phosgene, or ones obtained by ester interchange reaction of dihydroxyaryl compounds and diphenylcarbonate. A typical polycarbonate is one obtained by reaction of 2,2'-bis(4-hydroxyphenyl)propane and phosgene.

The dihydroxyaryl compounds which are raw materials of polycarbonate may, for example, be bis(4-hydroxyphenyl)methane, 1,1'-bis(4-hydroxyphenyl)ethane, 2,2'-bis(4-hydroxyphenyl)propane, 2,2'-bis(4-hydroxyphenyl)butane, 2,2'-bis(4-hydroxyphenyl)octane, 2,2'-bis(4-hydroxy-3-methylphenyl)propane, 2,2'-bis(4-hydroxy-3-t-butylphenyl)propane, 2,2'-bis(3,5-dimethyl-4-hydroxyphenyl)propane, 2,2'-bis(4-hydroxy-3-cyclohexylphenyl)propane, 2,2'-bis(4-hydroxy-3-methoxyphenyl)propane, 1,1'-bis(4-hydroxyphenyl)cyclopentane, 1,1'-bis(4-hydroxyphenyl)cyclohexane, 1,1'-bis(4-hydroxyphenyl)cyclododecane, 4,4'-dihydroxyphenyl ether, 4,4'-dihydroxy-3,3'-dimethylphenyl ether, 4,4'-dihydroxydiphenyl sulfide, 4,4'-dihydroxy-3,3'-dimethyldiphenyl sulfide, 4,4'-dihydroxydiphenyl sulfoxide, 4,4'-dihydroxydiphenyl sulfone or bis(4-hydroxyphenyl) ketone. These dihydroxyaryl compounds may be used alone or in combination of two or more.

Preferred dihydroxyaryl compounds include bisphenols. bis(hydroxyphenyl)alkane such as 2,2'-bis(4-hydroxyphenyl)propane, bis(hydroxyphenyl)cycloalkane such as bis(4-hydroxyphenyl)cyclohexane, dihydroxydiphenyl sulfide, dihydroxydiphenyl sulfone and dihydroxydiphenyl ketone, which can form aromatic polycarbonates having a high heat resistance. Especially preferred dihydroxyaryl compounds include 2,2'-bis(4-hydroxyphenyl)propane, which can form bisphenol A type aromatic polycarbonate.

At the time of producing bisphenol A type aromatic polycarbonate, a part of bisphenol A may be replaced by other dihydroxyaryl compound if the replacement is conduced within the scope that heat resistance, mechanical strength and the like are not damaged.

The styrene-based resin that is the component (B) of the present invention may, for example, be a homopolymer or a copolymer of styrene or a styrene derivative such as α-methylstyrene or vinyl toluene, a copolymer of such a monomer and a vinyl monomer such as acrylonitryle or methylmethacrylate, a resin resulting from graft polymerization of styrene and/or a styrene derivative, or styrene and/or a styrene derivative and other vinyl monomer to diene-based rubber such as polybutane, ethylene/propylene-based rubber or acrylic rubber. For example, the resin may be polystyrene, high impact polystyrene, AS resin, MAS resin, ABS resin, AAS resin, AES resin or MBS resin.

When the aromatic polycarbonate (A) and the styrene-based resin (B) are melted and mixed, a so-called polymer alloy can be formed to obtain a molded product having high heat resistance and impact resistance. The ratio of the aromatic polycarbonate to the styrene-based resin can be selected from the range that heat resistance, impact resistance and melt fluidity, and the like are not damaged. For example, the ratio is the following degree: (A)/(B) = 40 to 95 / 60 to 5 (% by weight), and preferably 50 to 95 / 50 to 5 (% by weight), and more preferably 55 to 85 / 45 to 15 (% by weight). If the aromatic polycarbonate content is less than 40 % by weight, melt fluidity is high but heat resistance and impact resistance of the molded product are liable to be lowered. If it is more than 95 % by weight, melt fluidity is liable to be lowered in molding process.

The characteristic of the present invention is that, by using a phosphoric ester compound that is the component (C) and an organic phosphorus compound that is the component (D) together, it is possible to obtain a resin-molded product having excellent mechanical properties and high flame retardation that cannot be obtained by using a single of them. The phosphoric ester compound (C) is represented by the following formula (I): 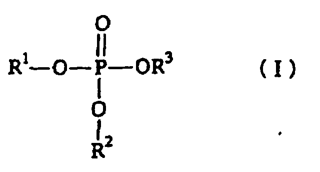 wherein R¹, R² and R³ are phenyl groups which may have an alkyl group having 1 - 4 carbon atoms, and R¹, R² and R³ may be the same or different.)

The phosphoric ester compound that is the component (C) includes for example triphenyl phosphate, tricresyl phosphate, trixylenyl phosphate, tris(isopropylphenyl) phosphate, tris(o-phenylphenyl) phosphate, tris(p-phenylphenyl) phosphate, cresyldiphenyl phosphate, xylenyldiphenyl phosphate, di(isopropylphenyl)phenyl phosphate, o-phenylphenyldicresyl phosphate. These phosphoric esters may be used alone or in combination of two or more.

It is preferred to use, among these phosphoric ester compounds, compounds represented by the formula (I) wherein R¹, R² and R³ each independently represents an aromatic group selected from phenyl, o-cresyl, p-cresyl and m-cresyl groups. Such phosphoric ester compounds include for example triphenyl phosphate, tricresyl phosphate and cresyldiphenyl phosphate. Of these, triphenyl phosphate is especially preferably used.

The organic phosphorus compound (D) in the present invention is represented by the following formula (II) or formula (III): 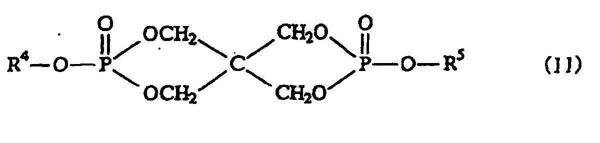 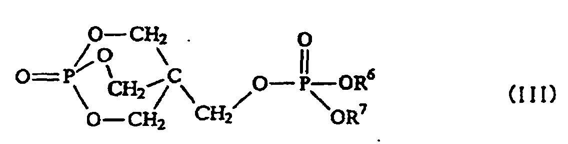 wherein R⁴ and R⁵ are aryl groups which may have 1 to 3 alkyl groups having 1 to 4 carbon atoms, R⁴ and R⁵ may be the same or different; R⁶ and R⁷ each represents a straight chain or branched alkyl group having 1 to 10 carbon atoms, a phenyl group, or an alkylphenyl group which has 1 to 3 alkyl groups having 1 to 5 carbon atoms.

The organic phosphorus compound (D) can be produced by a known method. For example, according to US Patent No. 3,090,799, the compound of the formula (II) can be produced by reacting pentaerythritol with phosphorus oxychloride, as is illustrated by the following scheme: 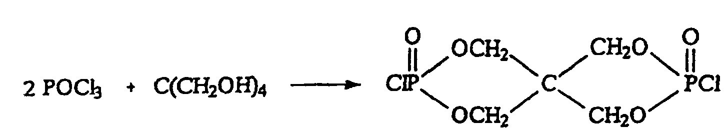 and then reacting the above-mentioned intermediate product with a monovalent phenol as is illustrated in the following scheme: 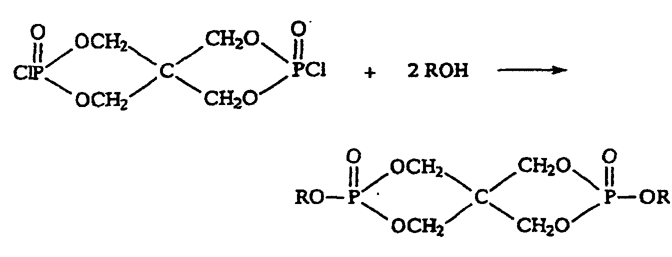 wherein R's are aromatic groups corresponding to R⁴ and R⁵.

In the present invention, R⁴ and R⁵ are aryl groups which may have 1 to 3 alkyl groups having 1 to 4 carbon atoms, and are, for example, phenyl, 2-methylphenyl, 4-methylphenyl, 2,6-dimethylphenyl, 2,4,6-trimethylphenyl, 2,6-di-tert-butylphenyl or 2,4,6-tri-tert-butylphenyl.

In the organic phosphorus compound represented by the formula (III), R⁶ and R⁷ each independently represents for example methyl, ethyl, isobutyl, t-butyl, n-butyl, neopentyl, cyclohexyl, n-hexyl, n-octyl, n-nonyl, phenyl, 2-methylphenyl, 4-methylphenyl, 2-ethylphenyl, 4-ethylphenyl, 2-isopropylphenyl, 4-isopropylphenyl, 2-n-butylphenyl, 4-n-butylphenyl, 2-isobutylphenyl, 4-isobutylphenyl, 2-t-butylphenyl, 4-t-butylphenyl, 2-neopentylphenyl, 4-neopentylphenyl, 2,4-dimethylphenyl, 2,6-dimethylphenyl, 2,4-di-t-butylphenyl, 2,6-di-t-butylphenyl, 4-t-butyl-2-methylphenyl, 2-t-butyl-4-methylphenyl, 2,4,6-trimethylphenyl, 2,4,6-tri-t-butylphenyl, 2,4-di-t-butyl-6-methylphenyl, 2,6-di-t-4-methylphenyl, 4-t-butyl-2,6-dimethylphenyl or 2-t-butyl-4,6-dimethylphenyl. These may be used along or in combination of two or more.

Preferred compounds among the organic phosphorus compounds represented by the formula (III) are ones represented by the following formula: 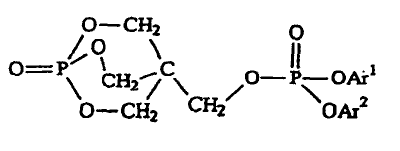 wherein Ar¹ and Ar² are phenyl groups, or phenyl groups which have 1 to 3 alkyl groups having 1 to 5 carbon atoms.

In the above-mentioned formula, both of Ar¹ and Ar² are preferably phenyl, 2-methylphenyl, 2-ethylphenyl, 2-isopropylphenyl, 2-t-butylphenyl, 4-t-butylphenyl, 2,4-dimethylphenyl, 2,6-dimethylphenyl, 2,4-di-t-butylphenyl, 2,6-di-t-butylphenyl, 4-t-butyl-2-methylphenyl, 2-t-butyl-4-methylphenyl, 2,4,6-trimethylphenyl, 2,4,6-tri-t-butylphenyl, 2,4-di-t-butyl-6-methylphenyl, or 2,6-di-t-butyl-4-methylphenyl, Both of them are more preferably phenyl, among these.

The organic phosphorus compound represented by the formula (III) is produced, for example, by reacting 4-hydroxymethyl-1-oxo-2,6,7-trioxa-1-phosphabicyclo[2.2.2]octane with a suitable chlorophosphate derivative in amounts of equivalent moles, in the presence of a base such as pyridine, in a suitable solvent such as dichloromethane.

In the resin composition of the present invention, the blend amount of the phosphoric ester compound (C) is 5 - 50 parts by weight per 100 parts by weight of a thermoplastic resin mixture comprising the aromatic polycarbonate (A) and the styrene-based resin (B). If the blend amount is less than 5 parts by weight, flame retardant effect is not sufficient. If it is more than 50 parts by weight, electric properties are also lowered, which is not preferable.

The blend amount of the organic phosphorus compound (D) is 0.5 - 30 parts by weight per 100 parts by weight of the thermoplastic resin mixture comprising the aromatic polycarbonate (A) and the styrene-based resin (B). If the blend amount is less than 0.5 parts by weight, synergetic effect for improvement in flame retardation, which is based on use together with the phosphoric ester compound (C), cannot be obtained. If it is more than 30 parts by weight, mechanical properties such as impact resistance are remarkably lowered, which is not preferable.

In the present invention, concerning the blend ratio of the phosphoric ester compound (C) to the organic phosphorus compound (D), the phosphorus concentration ratio (P_{D}/P_{C}) of the organic phosphorus compound (D) to the phosphoric ester compound (C) in the resin composition is less than 2 (which does not include 0 substantially), preferably 0.1 to 1.9, far preferably 0.5 to 1.0. If the phosphorus concentration ratio (P_{D}/P_{C}) is more than 2, synergetic effect for improvement in flame retardation by using the phosphoric ester compound (C) and the organic phosphorus compound (D) together is lowered.

The fluorocarbon resin that is the component (E) used in the present invention functions as a flame retardant aid for suppressing a live charcoal and drip of melted liquid. The fluorocarbon resin includes, for example, homopolymers or copolymers of a fluorine-containing monomer such as tetrafluoroethylene, chlorotrifluoroethylene, vinylfluoride, vinylidenefluoride, hexafluoropropylene, or perfluoroalkylvinyl ether, and copolymers of the above-mentioned fluorine-containing monomer and a polymerizable monomer such as ethylene, propylene or acrylate. Typical examples of the fluorocarbon resin are homopolymers such as polytetrafluoroethylene, polychlorotrifluoroethylene, and polyvinylidenefluoride, tetrafluoroethylene-hexafluoropropylene copolymer, tetrafluoroethylene-perfluoroalkylvinyl ether copolymer, tetrafluoroethylene-hexafluoropropylene-perfluoroalkylvinyl ether copolymer, ethylene-tetrafluoroethylene copolymer and ethylene-chlorotrifluoroethylene copolymer. These fluorocarbon resins may be used alone or in combination of two or more. Among these fluorocarbon resins, polytetrafluoroethylene is preferred. The fluorocarbon resins can be obtained by a conventional process, for example, an emulsion polymerization process described in US Patent No. 2,393,967.

The fluorocarbon resin may be blended by melt-mixing with the aromatic polycarbonate and the styrene-based resin. In many cases, however, it is used as powder having an average particle size of 10 to 5000 µm, preferably 100 to 1000 µ m, and more preferably 200 to 700 µm. This size means an average size of fluorocarbon resin of particles, which may have coagulate in the composition, existing in the composition.

For example, the used amount of the fluorocarbon resin (E) is 0.05 to 5 parts by weight, preferably 0.1 to 2 parts by weight and more preferably 0.2 to 1 parts by weight per 100 parts by weight of the thermoplastic resin mixture comprising the aromatic polycarbonate (A) and the styrene-based resin (B). If the added amount of the fluorocarbon resin is less than 0.05 parts by weight, the effect of preventing drip is small so that it is difficult to give a high flame retardation to the molded product. If it is more than 5 parts by weight, thermal shrinkage of the molded product is large so that dimensional precision at the time of heating is lowered and costs also become high.

The polyphenylene ether-based resin (F) used in the present invention is a homopolymer or a copolymer having monomer units represented by the following formula (IV) or (V). These polyphenylene ether-based resins may be used along or in combination of two or more; 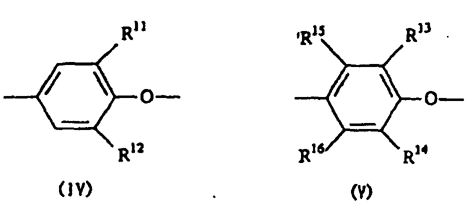 wherein R¹¹, R¹², R¹³, R¹⁴, R¹⁵ and R¹⁶ each independently represents an alkyl group having 1 to 4 carbon atoms (e.g. methyl, ethyl, propyl, butyl, t-butyl group), an aryl group (e.g. phenyl group), or a hydrogen atom, provided that both of R¹⁵ and R¹⁶ are not hydrogen atoms at the same time.

The polyphenylene ether-based homopolymer includes, for example, poly(2,6-dimethyl-1,4-phenylene) ether, poly(2-methyl-6-ethyl-1,4-phenylene) ether, poly(2,6-diethyl-1,4-phenylene) ether, poly(2-ethyl-6-n-propyl-1,4-phenylene) ether, poly(2,6-di-n-propyl-1,4-phenylene) ether, poly(2-methyl-6-n-butyl-1,4-phenylene) ether, poly(2-ethyl-6-isopropyl-1,4-phenylene) ether and poly(2-methyl-6-hydroxyethyl-1,4-phenylene) ether. Of these, poly(2,6-dimethyl-1,4-phenylene) ether is preferred.

The polyphenylene ether-based copolymer is a copolymer having a phenylene ether structure as a main monomer unit, and includes copolymers of a monomer that forms the above-mentioned homopolymer (in particular, 2,6-dimethylphenol or the like) and another phenols, (for example, a copolymer of 2,6-dimethylphenol and 2,3,6-trimethylphenol, a copolymer of 2,6-dimethylphenol and o-cresol, a copolymer of 2,6-dimethylphenol, 2,3,6-trimethylphenol and o-cresol).

For example, the used amount of the polyphenylene ether-based resin (F) is 0.1 to 20 parts by weight, preferably 0.1 to 10 parts by weight and more preferably 0.5 to 5 parts by weight per 100 parts by weight of the thermoplastic resin mixture comprising the aromatic polycarbonate (A) and the styrene-based resin (B). If the used amount of the polyphenylene ether-based resin is less than 0.1 parts by weight, the effect of giving flame retardation is small. If it is more than 20 parts by weight, the strength of the molded product is lowered.

Further preferred amounts of compounds (A), (B), (C), (D), (E) and (F) in the thermoplastic resin mixture are given in the subclaims.

In the flame retardant resin composition of the present invention, the following and variable additives may be added: for example, antidetriorators such as an oxidation inhibitor, an ultraviolet ray absorbent and a light resistance agent, a lubricant, an antistatic agent, a releasing agent, a plastitizer, reinforcing fibers such as glass fiber, carbon fiber, polyamide fiber, or polyester fiber, a filler such as calcium carbonate or talc, a colorant such as a pigment. The used amount of the additive may be suitably selected dependently on the sort of the additive, within the scope that heat resistance, impact resistance, mechanical strength and the like are not damaged.

### Preparation of a flame retardant resin composition

The flame retardant resin composition of the present invention may be a composition obtained by pre-mixing the aromatic polycarbonate (A), the styrene resin (B), the phosphoric ester compound (C), the organic phosphorus compound (D), and optionally the fluorocarbon resin (E), in a mixer such as a V-type blender, a supermixer, a super flouter, or a Henschel mixer. In many cases, however, the composition is usually a mixture obtained by melt-mixing the above-mentioned pre-mixture uniformly. Such a mixture can be obtained by melt-mixing the above-mentioned pre-mixture in a kneading means at, for example, 200 to 300 °C, preferably about 220 to 280 °C to form pellets. As the kneading means, various melting kneaders may be used, for example, a kneader or a monoaxial or biaxial extruder. In many case, however, the resin composition is melted and extruded, for example, in the biaxial extruder and then is made into pellets by a pelletizer.

The flame retardant resin composition of the present invention is useful as a raw material of various molded products such as housings and enclosures of electric goods for home use and for OA apparatus and housings and casings of portable telephones. Such molded products can be produced by a conventional method, for example, by injection-molding a pellet form flame retardant resin composition at a cylinder temperature of about 220 to 280 °C in a injection molding machine.

### Examples

The following will explain the present invention in detail, but the scope of the present invention is not limited to these examples. Evaluation of resin compositions of the following Examples and Comparative Examples was performed by the following manners.

### (1) Thermal deformation temperature

Thermal deformation temperature was measured according to ASTM D-256 by applying a load of 1.822 MPa (18.6 kg/cm²) to a test piece of 0.635 cm (1/4 inch) thickness.

### (2) Izod impact strength

Izod impact strength was measured according to ASTM D-256 by using a test piece having a cut notch and having a thickness of 0.635 cm (1/4 inches).

### (3) Flame retardation

Flame retardation was evaluated according to vertical fire test (94V-0) prescribed in the UL standard of the US, UL-94, as evaluation criteria, by using a test piece of 0.159 cm (1/16 inch) thickness.

### Production example of a thermoplastic resin mixture

As a polycarbonate resin, Toughlon FN2200 (trade name, manufactured by Idemitsu Petrochemical Co., Ltd., bisphenol A type polycarbonate, viscosity average molecular weight 22,000)(A1) was used. As styrene resins, the following were used.
① A polymer (B1) obtained by polymerizing 75 % by weight of styrene and 25 % by weight of acrylonitryl in an aqueous solution of a calcium phosphate type dispersant in a suspension polymerization manner.
② A polymer (B2) obtained by graft-polymerizing 45 parts by weight of styrene and 15 parts by weight of acrylonitryl in the presence of polybutadiene rubber latex (40 parts by weight, which was a value converted into a dry basis) in an emulsion polymerization manner.
③ A polymer (B3) obtained by adding 0.015 parts by weight of di-t-butylperoxide (DTBPO) to 100 parts by weight of a mixture solution wherein 90 parts by weight of styrene and 10 parts by weight of polybutadiene rubber were dissolved and then polymerizing the solution in a bulk polymerization manner.

They were mixed at the following ratios, respectively: A1/B1/B2 = 80/13/7, and 70/20/10, and A1/B3 = 80/20 (weight ratio). Thus, resin mixtures were obtained (the respective resin mixtures were called AB-1, AB-2 and AB-3).

### Examples 1 to 8, and Comparative Examples 1 to 5

The following were used: the above-mentioned thermoplastic resin compositions (AB-1, AB-2 and AB-3), triphenyl phosphate (TPP) as the phosphoric ester compound (C), diphenylpentaerythritol diphosphate (DPPDP) (m.p.: 197 °C) as the organic phosphorus compound (D), an organic phosphorus compound (BPPE) represented by the following formula (VI) (m.p.: 165 °C): 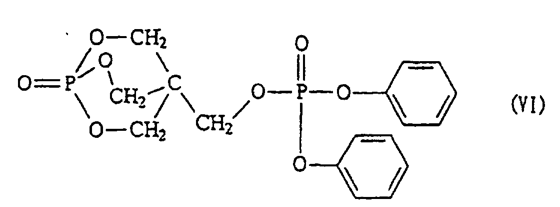 polytetrafluoroethylene (manufactured by Daikin Industries, Ltd., trade name: Polyflon TFE, average particle diameter: about 500 µm), as a fluorocarbon resin (E), poly(2,6-dimethyl-1,4-phenylene) ether (PPE) [GE Specialty Chemicals, Inc., BLENDEX HPP 820] as the polyphenylene ether-based resin (F) were used. These were added at ratios (by weight) shown in Tables 1 and 2, and then pre-mixed in a V-type blender for 40 minutes. This pre-mixed product was melt-extruded by a biaxial kneading extruder to make pellets.

The resultant pellets were dried for not less than 4 hours in an oven at 80 °C, and subsequently were subjected to an injection molding machine (cylinder temperature: 250 °C, mold temperate: 60 °C ) to prepare test pieces for ordinary physical properties. Physical properties were then measured by ordinary methods. The results are shown Tables 1 and 2.

**Table 1**

| | EXAMPLES | | | | | | | |
|---|---|---|---|---|---|---|---|---|
| | 1 | 2 | 2 | 4 | 5 | 6 | 7 | 8 |
| PC/ABS(AB-1) | 100 | 100 | 100 | 100 | 100 | | | |
| PC/ABS(AB-2) | | | | | | 100 | | |
| PC/HIPS(AB-3) | | | | | | | 100 | 100 |
| TPP(C) | 6.3 | 6.3 | 4.7 | 3.5 | 3.5 | 6.3 | 5.3 | 3.7 |
| DPPDP(D) | 2 | 2 | 3 | 3.8 | | 4 | 3.3 | 3.9 |
| BPPE(D) | | | | | 3.8 | | | |
| FLUOROCARBON RESIN(E) | | 0.3 | 0.3 | 0.3 | 0.3 | 0.3 | 0.3 | 0.3 |
| PPE(F) | | | | | | | | 3 |
| PHOSPHORUS CONCENTRATION RATIO (P_{D}/P_{C}) | 0.5 | 0.5 | 1 | 1.7 | 1.7 | 1 | 1 | 1.7 |
| THERMAL DEFORMATION TEMPERATURE(°C) | 90 | 90 | 93 | 95 | 94 | 87 | 84 | 86 |
| IZOD IMPACT STRENGTH (kg·cm/cm) | 17 | 17 | 15 | 13 | 15 | 10 | 10 | 8 |
| FLAME RETARDATION (UL94) | V-2 | V-0 | V-0 | V-0 | V-0 | V-0 | V-0 | V-0 |

**Table 2**

| | COMPARATIVE Examples | | | | |
|---|---|---|---|---|---|
| | 1 | 2 | 3 | 4 | 5 |
| PC/ABS(AB-1) | 100 | 100 | 100 | 100 | 100 |
| PC/ABS(AB-2) | | | | | |
| PC/HIPS(AB-3) | | | | | 100 |
| TPP(C) | 10 | | | 2 | 10 |
| DPPDP(D) | | 15 | | 4.7 | |
| BPPE(D) | | | 15 | | |
| FLUOROCARBON RESIN(E) | 0.3 | 0.3 | 0.3 | 0.3 | 0.3 |
| PPE(F) | | | | | |
| PHOSPHORUS CONCENTRATION RATIO (P_{D}/P_{C}) | | | | 3.6 | |
| THERMAL DEFORMATION TEMPERATURE(°C) | 85 | 104 | 106 | 98 | 79 |
| IZOD IMPACT STRENGTH (kg·cm/cm) | 10 | 2 | 3 | 6 | 7 |
| FLAME RETARDATION (UL94) | B | B | B | B | B |

## Claims

1. A polycarbonate-based flame retardant resin composition which comprises:
- an aromatic polycarbonate (A);
- a styrene-based resin (B);
- a phosphoric ester compound (C) represented by the following formula (I); and
- an organic phosphorus compound (D) represented by the following formula (II) or (III),
wherein the ratio of the phosphorus concentration of the organic phosphorus compound (D) to that of the phosphoric ester compound (C), P_{D}/P_{C}, is less than 2, which does not include 0 substantially, in the composition; and
wherein the amount of the phosphoric ester compound (C) is 5 to 50 parts by weight and the amount of the organic phosphorus compound (D) is 0.5 to 30 parts by weight per 100 parts by weight of the thermoplastic resin mixture comprising the aromatic polycarbonate (A) and the styrene-based resin (B); 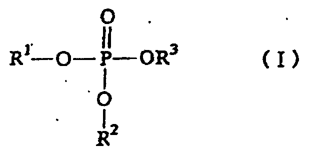 wherein R¹, R² and R³ are the same as or different from one another and are a phenyl group which may have an alkyl group having 1 to 4 carbon atoms; 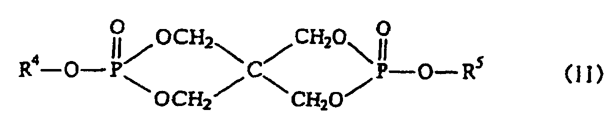 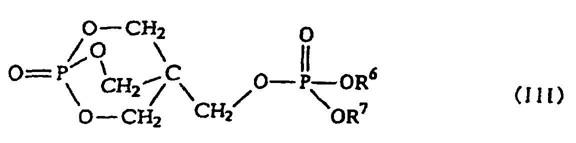 wherein R⁴ and R⁵ are aryl groups which may have 1 to 3 alkyl groups having 1 to 4 carbon atoms, R⁴ and R⁵ may be the same as or different from one another, and R⁶ and R⁷ each represents a straight chain or branched alkyl group having 1 to 10 carbon atoms, a phenyl group, or an alkyl phenyl group which has 1 to 3 alkyl groups having 1 to 5 carbon atoms.

2. The composition according to claim 1, wherein the aromatic polycarbonate (A) is a bisphenol A type aromatic polycarbonate.

3. The composition according to claim 1, further comprising a fluorocarbon resin (E).

4. The composition according to claim 1, further comprising a polyphenylene ether-based resin (F).

5. The composition according to claim 1, which contains 5 to 50 parts by weight of the phosphoric ester compound (C) and 0.5 to 30 parts by weight of the organic phosphorus compound (D) per 100 parts by weight of a thermoplastic resin mixture of 40 to 95 % by weight of the aromatic polycarbonate (A) and 60 to 5 % by weight of the styrene-based resin (B).

6. The composition according to claim 3, which contains 5 to 50 parts by weight of the phosphoric ester compound (C), 0.5 to 30 parts by weight of the organic phosphorus compound (D) and 0.05 to 5 parts by weight of the fluorocarbon resin (E) per 100 parts by weight of a thermoplastic resin mixture of 40 to 95 % by weight of the aromatic polycarbonate (A) and 60 to 5 % by weight of the styrene-based (B).

7. The composition according to claim 4, which contains 5 to 50 parts by weight of the phosphoric ester compound (C), 0.5 to 30 parts by weight of the organic phosphorus compound (D) and 0.1 to 20 parts by weight of the polyphenylene ether (F) per 100 parts by weight of a thermoplastic resin mixture of 40 to 95 % by weight of the aromatic polycarbonate (A) and 60 to 5 % by weight of the styrene-based resin (B).

8. The composition according to claim 1, which comprises 5 to 50 parts by weight of the phosphoric ester compound (C) and 0.5 to 30 parts by weight of the organic phosphorus compound (D) and further 0.05 to 5 parts by weight of a fluorocarbon resin (E) and 0.1 to 20 parts by weight of a polyphenylene ether (F) per 100 parts by weight of a thermoplastic resin mixture of 40 to 95 % by weight of the aromatic polycarbonate (A) and 60 to 5 % by weight of the styrene-based resin (B).

## Patentansprüche

1. Flammenhemmende Harzzusammensetzung auf Polycarbonatbasis, welche umfasst:
- ein aromatisches Polycarbonat (A);
- ein Harz auf Styrolbasis (B),
- eine Phosphorsäureesterverbindung (C), die durch die folgende Formel (1) dargestellt wird; und
- eine organische Phosphorverbindung (D), die durch die folgende Formel (II) oder (III) dargestellt wird;
wobei das Verhältnis der Phosphorkonzentration der organischen Phosphorverbindung (D) zu der der Phosphorsäureesterverbindung (C), P_{D}/P_{C.} weniger als 2 ist, was im wesentlichen 0 nicht beinhaltet, in der Zusammensetzung; und
wobei die Menge der Phosphorsäureesterverbindung (C) 5 bis 50 Gewichtsteile beträgt und die Menge der organischen Phosphorverbindung (D) 0,5 bis 30 Gewichtsteile pro 100 Gewichtsteilen des thermoplastischen Harzgemisches beträgt, dass das aromatische Polycarbonat (A) und das Harz auf Styrolbasis (B) umfasst: 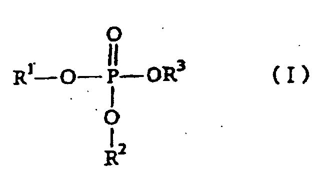 wobei R¹, R² und R³ gleich oder unterschiedlich sind und eine Phenylgruppe darstellen, die eine Alkylgruppe mit 1 bis 4 Kohlenstoffatomen besitzen kann; 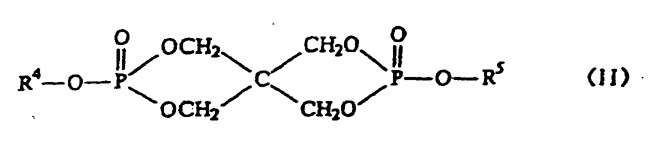 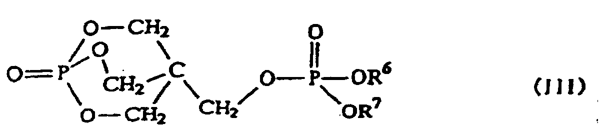 wobei R⁴ und R⁵ Arylgruppen sind, die 1 bis 3 Alkylgruppen mit 1 bis 4 Kohlenstoffatomen besitzen können, R⁴ und R⁵ gleich oder unterschiedlich sein können und R⁶ und R⁷ jeweils eine geradkettige oder verzweigte Alkylgruppe mit 1 bis 10 Kohlenstoffatomen, eine Phenylgruppe oder eine Alkylphenylgruppe mit 1 bis 3 Alkylgruppen mit 1 bis 5 Kohlenstoffatomen darstellen.

2. Zusammensetzung nach Anspruch 1, wobei das aromatische Polycarbonat (A) ein aromatisches Polycarbonat vom Bisphenol-A-Typ ist.

3. Zusammensetzung nach Anspruch 1, die weiterhin ein Fluorkohlenstoffharz (E) umfasst.

4. Zusammensetzung nach Anspruch 1, die weiterhin ein Harz auf Polyphenylenetherbasis (F) umfasst.

5. Zusammensetzung nach Anspruch 1, die 5 bis 50 Gewichtsteile der Phosphorsäureesterverbindung (C), 0,5 bis 30 Gewichtsteile der organischen Phosphorverbindung (D) pro 100 Gewichtsteilen eines thermoplastischen Harzgemisches von 40 bis 95 Gew.% des aromatischen Polycarbonats (A) und 60 bis 5 Gew.% des Harzes auf Styrolbasis (B) enthält.

6. Zusammensetzung nach Anspruch 3, die 5 bis 50 Gewichtsteile der Phosphorsäureesterverbindung (C), 0,5 bis 30 Gewichtsteile der organischen Phosphorverbindung (B) und 0,05 bis 5 Gewichtsteile des Fluorkohlenstoffharzes (E) pro 100 Gewichtsteilen eines thermoplastischen Harzgemisches von 40 bis 95 Gew.% des aromatischen Polycarbonats (A) und 60 bis 5 Gew.% des Harzes auf Styrolbasis (B) enthält.

7. Zusammensetzung nach Anspruch 4, die 5 bis 50 Gewichtsteile der Phosphorsäureesterverbindung (C), 0,5 bis 30 Gewichtsteile der organischen Phosphorverbindung (D) und 0,1 bis 20 Gewichtsteile des Polyphenylenethers (F) pro 100 Gewichtsteilen eines thermoplastischen Harzgemisches von 40 bis 95 Gew.% des aromatischen Polycarbonats (A) und 60 bis 5 Gew.% des Harzes auf Styrolbasis (B) enthält.

8. Zusammensetzung nach Anspruch 1, die 5 bis 50 Gewichtsteile der Phosphorsäureesterverbindung (C) und 0,5 bis 30 Gewichtsteile der organischen Phosphorverbindung (D) und weiterhin 0,05 bis 5 Gewichtsteile eines Fluorkohlenstoffharzes (E) und 0,1 bis 20 Gewichtsteile eines Polyphenylenethers (F) pro 100 Gewichtsteilen eines thermoplastischen Harzgemisches von 40 bis 95 Gew.% des aromatischen Polycarbonats (A) und 60 bis 5 Gew.% des Harzes auf Styrolbasis (B) umfasst.

## Revendications

1. Composition de résine ignifuge à base de polycarbonate qui comprend :
- un polycarbonate aromatique (A) ;
- une résine à base de styrène (B) ;
- un composé ester phosphorique (C) représenté par la formule suivante (I) ; et
- un composé de phosphore organique (D) représenté par la formule suivante (II) ou (III),
dans laquelle le rapport de concentration en phosphore du composé de phosphore organique (D) à celle du composé ester phosphorique (C), P_{D}/P_{C}, est inférieur à 2, qui n'inclut sensiblement pas 0, dans la composition ; et
dans laquelle la quantité de composé ester phosphorique (C) vaut de 5 à 50 parties en poids et la quantité de composé de phosphore organique (D) vaut de 0,5 à 30 parties en poids pour 100 parties en poids du mélange de résine thermoplastique comprenant le polycarbonate aromatique (A) et la résine à base de styrène (B) ; 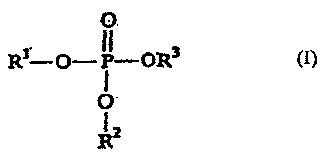 dans laquelle R¹, R² et R³ sont identiques ou différents les uns des autres et représentent un groupe phényle qui peut comporter un groupe alkyle ayant de 1 à 4 atomes de carbone ; 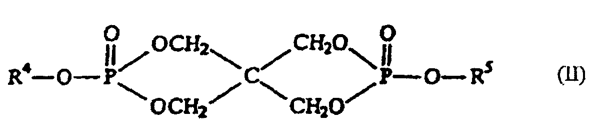 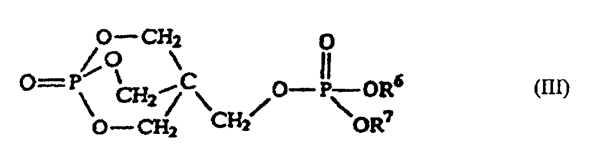 dans lesquelles R⁴ et R⁵ représentent des groupes aryles qui peuvent comporter 1 à 3 groupes alkyles ayant 1 à 4 atomes de carbone, R⁴ et R⁵ peuvent être identiques ou différents l'un de l'autre, et R⁶ et R⁷ représentent chacun un groupe alkyle à chaîne droite ou ramifiée ayant 1 à 10 atomes de carbone, un groupe phényle ou un groupe alkylphényle qui comporte 1 à 3 groupes alkyles ayant 1 à 5 atomes de carbone.

2. Composition selon la revendication 1, dans laquelle le polycarbonate aromatique (A) est un polycarbonate aromatique de type bisphénol A.

3. Composition selon la revendication 1, comprenant en outre une résine fluorocarbonée (E).

4. Composition selon la revendication 1, comprenant en outre une résine à base de polyphénylène éther (F).

5. Composition selon la revendication 1, qui contient 5 à 50 parties en poids du composé ester phosphorique (C) et 0,5 à 30 parties en poids du composé de phosphore organique (D) pour 100 parties en poids d'un mélange de résine thermoplastique de 40 à 95 % en poids du polycarbonate aromatique (A) et 60 à 5 % en poids de la résine à base de styrène (B).

6. Composition selon la revendication 3, qui contient 5 à 50 parties en poids du composé ester phosphorique (C), 0,5 à 30 parties en poids du composé de phosphore organique (D) et 0,05 à 5 parties en poids de la résine fluorocarbonée (E) pour 100 parties en poids d'un mélange de résine thermoplastique de 40 à 95 % en poids du polycarbonate aromatique (A) et 60 à 5 % en poids de la résine à base de styrène (B).

7. Composition selon la revendication 4, qui contient 5 à 50 parties en poids du composé ester phosphorique (C), 0,5 à 30 parties en poids du composé de phosphore organique (D) et 0,1 à 20 parties en poids du polyphénylène éther (F) pour 100 parties en poids d'un mélange de résine thermoplastique de 40 à 95 % en poids du polycarbonate aromatique (A) et 60 à 5 % en poids de la résine à base de styrène (B).

8. Composition selon la revendication 1, qui comprend 5 à 50 parties en poids du composé ester phosphorique (C) et 0,5 à 30 parties en poids du composé de phosphore organique (D) et également 0,05 à 5 parties en poids d'une résine fluorocarbonée (E) et 0,1 à 20 parties en poids d'un polyphénylène éther (F) pour 100 parties en poids d'un mélange de résine thermoplastique de 40 à 95 % en poids du polycarbonate aromatique (A) et 60 à 5 % en poids de la résine à base de styrène (B).
